# Europäisches Patentamt
# European Patent Office
# Office européen des brevets

(11) Veröffentlichungsnummer : **0 052 211 B1**

(12) **EUROPÄISCHE PATENTSCHRIFT**

(45) Veröffentlichungstag der Patentschrift :
24.04.85

(21) Anmeldenummer : 81107884.9

(22) Anmeldetag : 03.10.81

(51) Int. Cl.⁴ : **C 08 G 12/32, C 08 L 61/28**

(54) **Mittel zur Modifizierung von Aminoplastharzen und Verfahren zu seiner Herstellung.**

(30) Priorität : 19.11.80 DE 3043616

(43) Veröffentlichungstag der Anmeldung :
26.05.82 Patentblatt 82/21

(45) Bekanntmachung des Hinweises auf die Patenterteilung : 24.04.85 Patentblatt 85/17

(84) Benannte Vertragsstaaten :
**AT BE CH DE FR IT LI SE**

(56) Entgegenhaltungen :
EP-A- 0 006 148
DE-A- 1 932 523
DE-A- 2 603 768
DE-A- 2 609 696
GB-A-    851 295

(73) Patentinhaber : **BASF Aktiengesellschaft**
**Carl-Bosch-Strasse 38**
**D-6700 Ludwigshafen (DE)**

(72) Erfinder : **Weiss, Wolfram, Dr.**
**Am Speyerweg 40**
**D-6704 Mutterstadt (DE)**
Erfinder : **Petersen, Harro, Dr.**
**Kalmitstrasse 23**
**D-6710 Frankenthal (DE)**
Erfinder : **Etling, Hans, Dr.**
**Pommernstrasse 12**
**D-6701 Dannstadt-Schauernheim 1 (DE)**
Erfinder : **Duda, Ulrich-Michael, Dr.**
**Max-Slevogt-Strasse 13A**
**D-6710 Frankenthal (DE)**
Erfinder : **Lelgemann, Ludwig**
**Amsterdamer Strasse 16**
**D-6700 Ludwigshafen (DE)**
Erfinder : **Pfalzgraf, Walter**
**Karl-Marx-Strasse 23**
**D-6704 Mutterstadt (DE)**

0 052 211

**Beschreibung**

Die Erfindung betrifft ein neues Mittel auf der Grundlage eines Aminoplastkondensats, das, in geringer Menge einem gewöhnlichen Aminoplastharz, insbesondere einem Melaminharz zugesetzt, dessen Lagerstabilität und Verarbeitungseigenschaften beträchtlich verbessert und das auch für sich ein wertvolles Harz zur Lösung spezieller Aufgaben darstellt.

Aus der DE-OS 19 32 523 ist ein Mittel zur Modifizierung von insbesondere Melaminharzen bekannt, das durch Kondensation von Melamin, Formaldehyd und einem mehrwertigen Alkohol in wasserfreier Umgebung bzw. in dem mehrwertigen Alkohol als Lösungsmittel erhalten wird. Die näheren Umstände dieses Verfahrens sind jedoch nicht günstig, vor allem wegen der erforderlichen Reaktionstemperatur und der Notwendigkeit, den überschüssigen mehrwertigen Alkohol abzudestillieren. Das erhaltene Produkt scheint außerdem eine weitere Umsetzung mit einer Dicarbonsäure zu erfordern, um seinen Zweck zu erfüllen.

Daher wurde in der DE-OS 26 09 696 vorgeschlagen, Melamin, Formaldehyd und mehrwertigen Alkohol in wäßriger Lösung zu kondensieren, wobei jedoch ein bestimmtes Mindestmolverhältnis von Formaldehyd zu Melamin eingehalten werden muß. Dies ergibt sich aus der Darlegung in der DE-OS 26 09 696, Seite 2, wonach kein wasserlösliches Produkt erhalten werden kann, wenn das Molverhältnis von Formaldehyd zu Melamin annähernd eins beträgt. Praktisch wird demnach ein Molverhältnis von etwa 2 verwendet (im folgenden ist mit Molverhältnis stets das Verhältnis von Formaldehyd zu Melamin bzw. einem anderen infrage kommenden Aminoplastbildner gemeint). Modifizierungsmittel mit einem solch hohen Formaldehydanteil bedeuten jedoch, daß die unerwünschte Abspaltung von Formaldehyd aus den damit modifizierten Harzen größer wird, wenn man sie in mehr als nur unbedeutender Menge zusetzt. Außerdem wirkt bei Melaminharzen die Erhöhung des Formaldehyd-Anteils im Sinne einer zunehmenden Versprödung und Rißanfälligkeit bei Oberflächenbeschichtungen.

Aufgabe der Erfindung ist daher, Modifizierungsmittel und ein Verfahren zu ihrer Herstellung anzugeben, die einen möglichst niedrigen Gehalt an Formaldehyd aufweisen und in höherer als nur unbedeutender Menge zugesetzt werden können, um herkömmliche Aminoplastharze zu verbessern.

Es wurde gefunden, daß man Kondensate auf der Grundlage von Formaldehyd, Melamin und gegebenenfalls einem mehrwertigen Alkohol mit einem F/M-Verhältnis von annähernd 1 (eins) erhält, wenn man diese Ausgangsstoffe in Gegenwart von Wasser bei einem pH-Wert oberhalb von 7 umsetzt.

Der pH-Wert wird vorzugsweise durch Zusatz einer schwachen Base, etwa eines Alkanolamins eingestellt.

Es kann dahingestellt bleiben, ob unter diesen Bedingungen der mehrwertige Alkohol einkondensiert wird oder nur ein Lösungsmittel für die Umsetzung darstellt ; seine Menge, bezogen auf das gesamte Gemisch, beträgt i. a. 20 bis 70 %, was einer Molmenge, bezogen auf Melamin von etwa 0,5 bis 6 entspricht. Mindestens soll eine Menge von etwa 30 Gew.% verwendet werden. Zwischen der Konzentration des Melamin-Kondensats — mindestens etwa 20 % — und der des mehrwertigen Alkohols besteht insofern ein Zusammenhang, als steigender Gehalt an Kondensat i. a. einen geringeren Gehalt an mehrwertigem Alkohol bedingt. Das F/M-Molverhältnis beträgt etwa 1 bis 1,25, insbesondere 1 bis 1,2.

Aus diesem Sachverhalt ergibt sich, wenn man ein Glykol, z. B. Ethylenglykol als mehrwertigen Alkohol verwendet, daß die Wassermenge i. a. ziemlich gering ist. Sie liegt gewöhnlich bei 5 bis 25 %, bezogen auf das Reaktionsgemisch und wird i. a. in der richtigen Menge vorliegen, wenn man etwa 40 %igen Formaldehyd verwendet, der eine hinreichende Wassermenge mitbringt.

Um die Auflösung des Melamins im Reaktionsgemisch zu beschleunigen, ist es zweckmäßig, die Kondensation bei über 100 °C vorzunehmen. Es kann eine Temperatur von 130 °C und auch darüber eingehalten werden. Bevorzugt ist eine Reaktionstemperatur von 110 bis 125 °C, wobei das Gemisch bei atmosphärischem Druck siedet. Durch leicht geänderten Betriebsdruck kann eine andere Siedetemperatur eingestellt werden.

Glykole sind gute Lösungsmittel für Aminoplastkondensate ; man kann daher nach der Erfindung ziemlich hohe Kondensationsgrade erreichen, wie sich aus der geringen Wasserverdünnbarkeit ergibt, die die Kondensate am Ende der Kondensation aufweisen. Dieser Umstand ist auch günstig im Sinne der Erfindung, da die Verbesserung der Lagerstabilität besonders mit weit kondensiertem Modifizierungsmittel gelingt.

Als mehrwertige Alkohole bzw. Glykole i. S. der Erfindung sind die auch in den DE-OSen 19 32 523 und 26 09 696 aufgeführten geeignet. Insbesondere verwendet man Ethylen- oder Propylenglykol und deren Oligomere bis zum Triglykol und deren technisch übliche Mischungen. Höher kondensierte Oligomere zu verwenden, ist zwar nicht ausgeschlossen, jedoch sind Mischungen, die solche Polyglykole enthalten, sehr zähflüssig. Mehrwertige Alkohole, die sich ableiten von Butandiol oder höheren Diolen, können nicht mehr ausschließlich verwendet werden, sondern nur in Mischung mit den vorgenannten.

Die Kondensationsreaktion wird so weit wie möglich getrieben, jedenfalls jedoch bis zur begrenzten Wasserverdünnbarkeit. Günstig ist eine Wasserverdünnbarkeit von 1 : 1 oder weniger, bezogen auf eine mindestens 75 % nichtwäßrige Bestandteile aufweisende Lösung.

Das so erhaltene Modifizierungsmittel kann üblichen Aminoplastharzen in Mengen von bis zu 50 %, bezogen auf die nichtwäßrigen Bestandteile, zugesetzt werden, wenn diese als Tränkharze Verwendung finden sollen. Gewöhnlich ist ein Zusatz von 1 bis 30 % jedoch ausreichend.

2

Übliche Aminoplastharze im Sinne der Erfindung sind vorzugsweise Melaminharze und zwar solche, die als Holzleime vorgesehen sind und insbesondere sog. Tränkharze.

Es ist zweckmäßig, speziell solche Harze zu verwenden, die nicht allzu weit kondensiert worden sind und insbesondere solche, die noch beliebig wasserverdünnbar sind. Es ist erstaunlich, daß gerade niedrig kondensierte Harze, die für sich allein sehr wenig stabil sind, durch Zusatz des erfindungsgemäßen Mittels ausgezeichnet stabilisiert werden können und speziell als Tränkharze eine hohe Tränkgeschwindigkeit erreichen.

Man wählt am besten Harze, die ein etwas höheres Molverhältnis F/M aufweisen, als heute üblich. Zusammen mit dem Modifizierungsmittel sollte sich ein Gesamtmolverhältnis von etwa 1,5 bis 1,7 ergeben, d. h. das unmodifizierte Harz soll i. a. ein Molverhältnis von etwa 1,6 bis 1,8 aufweisen.

Beispiele für die Herstellung eines Modifizierungsmittels

1. Zur Erzielung eines Molverhältnisses von Melamin : Formaldehyd : Diethylenglykol wie 1 : 1,20 : 2,0 werden 1 000 g Diethylenglykol, 417 g Formaldehyd (40 %ig in Wasser, nicht stabilisiert), 2,7 g Diethylethanolamin und 583 g Melamin bis zum Sieden (114 °C) erhitzt und 85 Minuten bei dieser Temperatur belassen. Es entsteht eine klare Lösung, die nach Abkühlen auf 20 °C eine Wasserverdünnbarkeit von 1 : 0,7, eine Viskosität von 700 mPas, einen pH-Wert von 9,8 und eine Lagerstabilität von mehr als 20 Wochen aufweist.

2. Zur Erzielung eines Molverhältnisses von Melamin : Formaldehyd : Triethylenglykol wie 1 : 1,20 : 1,4 werden 1 000 g Triethylenglykol, 428 g Formaldehyd (40 %ig in Wasser), 4,2 g Dimethylethanolamin und 600 g Melamin bis zum Sieden erhitzt und 90 Minuten bei Siedetemperatur belassen. Die Lösung weist nach Abkühlen auf 20 °C folgende Eigenschaften auf :

| | |
|---|---|
| pH-Wert : | 9,6 |
| Wasserverdünnbarkeit : | 1 : 0,4 |
| Viskosität : | 1 600 mPas |
| Lagerstabilität : | besser als 15 Wochen |

3. Zur Erzielung eines Molverhältnisses von Melamin : Formaldehyd : Ethylenglykol : Butandiol-1,4 wie 1 : 1,20 : 2,72 : 0,47 werden 960 g Ethylenglykol, 240 g Butandiol-1,4, 720 g Melamin, 514 g Formaldehyd (40 %ig in Wasser) und 3,2 g Diethylethanolamin zum Sieden erhitzt. Nach 50 Minuten bei Rückflußtemperatur von 120 °C entsteht eine klare Lösung, die nach Kühlen auf 105 °C weitere 100 Minuten bei dieser Temperatur belassen wird. Nach Abkühlen auf 20 °C weist die Lösung folgende Eigenschaften auf :

| | |
|---|---|
| pH-Wert : | 9,8 |
| Wasserverdünnbarkeit : | 1 : 0,5 |
| Viskosität : | 360 mPas |
| Lagerstabilität : | besser als 15 Wochen |

4. Zur Erzielung eines Molverhältnisses von Melamin : Formaldehyd : Ethylenglykol wie 1 : 1 : 4,9 werden 1 200 g Ethylenglykol, 299 g Formaldehyd (40 %ig in Wasser), 502 g Melamin und 2,1 g Diethylethanolamin bei Siedetemperatur (117 °C) in Lösung gebracht und weitere 2 Stunden bei dieser Temperatur belassen. Nach Abkühlen auf 20 °C werden folgende Eigenschaften festgestellt :

| | |
|---|---|
| pH-Wert : | 9,8 |
| Wasserverdünnbarkeit : | 1 : 0,45 |
| Viskosität : | 120 mPas |
| Lagerstabilität : | besser als 8 Wochen |

Mischungsbeispiele

A. Aus  2 434 g  Formaldehyd (40 %ig in Wasser)
      1 073 g  Wasser
      2 479 g  Melamin
         9 g  Diethylethanolamin und
       14 ml  Kalilauge (c = 1,8 mol/l)

wird ein Melaminharz mit einem Molverhältnis Melamin : Formaldehyd wie 1 : 1,65 und einer Konzentration (M + F) von 57,6 % wie folgt erhalten :

Die Mischung aus Melamin, Formaldehyd und Wasser wird durch Zusatz der Kalilauge auf pH = 9,0 eingestellt.

Anschließend wird das Amin zugesetzt und auf 96 °C aufgeheizt, wobei eine klare Lösung entsteht.

Die Kondensation wird bei 96 °C bis zu einem Trübungspunkt (1 : 5) von etwa 30 °C fortgesetzt und dann rasch auf 20 °C abgekühlt. Die Harzlösung wird in Proben von je 1 000 g aufgeteilt, in die jeweils 200 g, im Mischungsbeispiel 4 nur 120 g der Modifizierungsmittel 1 bis 4 eingerührt werden. Man erhält Tränkharzlösungen mit folgenden Eigenschaften :

Tabelle

Eigenschaften modifizierter Harze

| Eigenschaft, jeweils auf 20 °C bezogen | Vergleich | Modifizierungsbeispiel | | | |
|---|---|---|---|---|---|
| | | 1 | 2 | 3 | 4 |
| Wasserverdünnbarkeit | 1 : 2,8 | 1 : 0,9 | 1 : 1 | 1 : 1,1 | 1 : 1 |
| Trübungspunkt (1 + 5) [°C] | 31 | > 85 | > 85 | > 85 | > 85 |
| Dichte [g/cm³] | 1,252 | 1,250 | 1,250 | 1,250 | 1,245 |
| Viskosität [mPas] | 60 | 110 | 110 | 100 | 65 |
| Trockengehalt [%] 120 °C/2 h | 56 | 60 | 60 | 60 | 59 |
| pH-Wert | 10,1 | 10,1 | 10,1 | 10,05 | 10,05 |
| Lagerstabilität [Tage] | 1 | 45 | 50 | 40 | 35 |

Vergleich : nicht modifiziertes Harz.

B. Aus 2 970 g  Formaldehyd (40 %ig in Wasser)
      3 020 g  Melamin
        10 g  Diethylethanolamin
        18 ml Kalilauge (c = 1,8 mol/l)

wird ein Melaminharz mit einem Molverhältnis Melamin : Formaldehyd wie 1 : 1,65 und einer Konzentration ($\Sigma M + F$) von 70,3 % wie folgt hergestellt :

Melamin und Formaldehyd werden gemischt, bei Raumtemperatur mit der Kalilauge auf pH = 9,2 eingestellt und anschließend mit dem Amin versetzt. Es wird bis zum Sieden (104 °C) erhitzt und bei Rückflußtemperatur bis zum Aufklaren der Lösung rund 60 Minuten belassen. Anschließend wird bei 98 °C bis zu einem Trübungspunkt (1 : 5) von 50 °C umgesetzt. Nach Abkühlen auf Raumtemperatur wird wie unter A beschrieben, jeweils 1 000 g der Lösung mit 200 g des Modifizierungsmittels gemäß Beispiel 1 bis 3 verrührt.

Tabelle B

| | Vergleich | Modifizierungsbeispiel | | |
|---|---|---|---|---|
| | | 1 | 2 | 3 |
| Wasserverdünnbarkeit | 1 : 1,5 | 1 : 0,9 | 1 : 0,8 | 1 : 1,05 |
| Trübungspunkt (1 : 5) [°C] | 50 | > 85 | > 85 | > 85 |
| Dichte [g/cm³] | 1,33 | 1,31 | 1,31 | 1,31 |
| Viskosität [mPas] | 950 | 1 200 | 1 500 | 1 100 |
| Trockengehalt [%] (120 °C/2 h) | 68,0 | 71 | 71 | 71 |
| pH-Wert | 10,2 | 10,1 | 10,1 | 10,1 |
| Lagerstabilität [Tage] | 5 | 55 | 60 | 40 |

Die Lagerstabilität der Harzlösungen kann durch Zusatz bekannter Stabilisatoren noch weiter erhöht werden.

Stellt man in üblicher Weise Harzlösungen mit einer Bruttozusammensetzung her, wie sie die Mischungen A1 bis A4 oder B1, B2 und B3 aufweisen, so wird in keinem Falle eine Lagerstabilität von 4 Wochen überschritten.

Vergleich mit dem Stand der Technik

1. Ein nach Beispiel 1 der DE-OS 19 32 523 hergestelltes Modifizierungsmittel für Aminoplastharze aus Melamin, Paraformaldehyd und wasserfreiem Glykol mit einem Molverhältnis von Formaldehyd zu Melamin über 1 trübte nach 5 Tagen ein und zeigte keine stabilisierende Wirkung.

2. Das Beispiel der DE-OS 26 09 696 wurde nachgearbeitet, es konnte keine lagerstabilisierende Wirkung festgestellt werden. Außerdem war das erhaltene Modifizierungsmittel nur etwa 5 Wochen verarbeitbar.

## Patentansprüche

1. Verfahren zur Herstellung von wäßrigen Modifizierungsmitteln für Aminoplastharze, die ihrerseits ein Aminoplastkondensat auf der Grundlage von Formaldehyd und Melamin bilden und einen mehrwertigen Alkohol enthalten, dadurch gekennzeichnet, daß man Formaldehyd und Melamin in Gegenwart eines mehrwertigen Alkohols in wäßriger Lösung oberhalb von pH 7 umsetzt, wobei man das Molverhältnis F : M : mehrwertigem Alkohol wie 1 bis 1,25 : 1 : 0,5 bis 6 wählt.

2. Verfahren nach Anspruch 1, dadurch gekennzeichnet, daß man die Umsetzung oberhalb von 100 °C vornimmt.

3. Verfahren nach Anspruch 1, dadurch gekennzeichnet, daß man die Umsetzung zwischen 100 und 130 °C, gegebenenfalls bei einem von atmosphärischem Druck verschiedenen Druck vornimmt.

4. Verfahren nach Anspruch 1, dadurch gekennzeichnet, daß man die Konzentration der Reaktionsteilnehmer so wählt, daß sich eine Konzentration des Melamin-Formaldehyd-Kondensats von wenigstens 20 % ergibt.

5. Verfahren nach Anspruch 1, dadurch gekennzeichnet, daß man die Umsetzung bis zu einer Wasserverdünnbarkeit des Reaktionsgemisches von nicht mehr als 1 : 1, bestimmt bei Raumtemperatur, führt.

6. Mittel, insbesondere Modifizierungsmittel zur Erzielung von Aminoplastharzen, die lagerstabil sind und ein niedriges Molverhältnis aufweisen, auf der Grundlage eines Aminoplastkondensats von Formaldehyd, Melamin und einem mehrwertigen Alkohol, dadurch gekennzeichnet, daß es erhalten werden kann, indem man in wäßriger Lösung oberhalb von pH 7 Formaldehyd, Melamin und einen mehrwertigen Alkohol mit bis zu 10 C-Atomen in einem Molverhältnis von 1 bis 1,2 : 1 : 1 bis 5 bei Siedetemperatur bis zur begrenzten Wasserverdünnbarkeit umsetzt, wobei die Mengen der Reaktionsteilnehmer so gewählt werden, daß eine wenigstens 30 %ige Lösung des Kondensats erhalten wird.

7. Tränkharz auf der Grundlage eines Melamin-Formaldehyd-Harzes, enthaltend 1 bis 50 Gew.%, bezogen auf die nichtwäßrigen Bestandteile, eines Modifizierungsmittels nach einem der Ansprüche 1 bis 6 mit der Maßgabe, daß das Gesamtmolverhältnis von Formaldehyd zu Melamin 1,5 bis 1,7 beträgt.

8. Verwendung von Aminoplastkondensaten, die nach einem der Ansprüche 1 bis 5 erhalten worden sind, zur Modifizierung von Tränkharzen.

## Claims

1. A process for the preparation of aqueous modifiers for aminoplast resins, which in their turn form an aminoplast condensate based on formaldehyde and melamine and contain a polyhydric alcohol, wherein formaldehyde and melamine are reacted in the presence of a polyhydric alcohol in aqueous solution at a pH above 7, the molar ratio of formaldehyde to melamine to polyhydric alcohol being 1 to 1.25 : 1 : 0.5 to 6.

2. A process as claimed in claim 1, wherein the reaction is carried out at above 100 °C.

3. A process as claimed in claim 1, wherein the reaction is carried out at from 100 to 130 °C at atmospheric pressure or subatmospheric or superatmospheric pressure.

4. A process as claimed in claim 1, wherein the concentration of the reactants is so chosen that the concentration of the melamine-formaldehyde condensate is at least 20 %.

5. A process as claimed in claim 1, wherein the reaction is carried out until the reaction mixture is dilutable with water in a ratio of not more than 1 : 1, determined at room temperature.

6. An agent, particularly a modifier for the production of aminoplast resins, which is storage-stable, has a low molar ratio and is based on an aminoplast condensate of formaldehyde and melamine and a polyhydric alcohol, which agent is obtainable by reacting formaldehyde, melamine and a polyhydric alcohol of up to 10 carbon atoms in a molar ratio of 1 to 1.2 : 1 : 1 to 5, at boiling temperature, in aqueous solution at a pH above 7 until limited water dilutability is achieved, the amounts of the reactants being so chosen that an at least 30 % strength solution of the condensate is obtained.

7. An impregnating resin based on a melamine-formaldehyde resin and containing from 1 to 50 % by weight, based on the non-aqueous components, of a modifier as claimed in any of claims 1 to 6, with the proviso that the total molar ratio of formaldehyde to melamine is 1.5 to 1.7 : 1.

8. The use of an aminoplast condensate, which has been obtained as claimed in any of claims 1 to 5, for modifying impregnating resins.

## Revendications

1. Procédé pour la préparation d'agents de modification aqueux pour résines aminoplastes, représentant de leur côté un produit de condensation aminoplaste à base de formaldéhyde et de mélamine et contenant un polyalcool, caractérisé en ce qu'on fait réagir le formaldéhyde et la mélamine en présence d'un polyalcool en solution aqueuse à un pH supérieur à 7, en choisissant un rapport molaire F : M : polyalcool de 1-1,25 : 1 : 0,5-6.

2. Procédé selon la revendication 1, caractérisé en ce qu'on mène la réaction au-dessus de 100 °C.

3. Procédé selon la revendication 1, caractérisé en ce qu'on mène la réaction entre 100 et 130 °C, le cas échéant sous une pression qui diffère de la pression atmosphérique.

4. Procédé selon la revendication 1, caractérisé en ce qu'on choisit la concentration des corps participant à la réaction de telle manière qu'il en résulte une concentration du produit de condensation de mélamine-formaldéhyde d'au moins 20 %.

5. Procédé selon la revendication 1, caractérisé en ce qu'on conduit la réaction jusqu'à une diluabilité à l'eau du mélange réactionnel qui, déterminée à la température ambiante, n'est pas supérieure à 1 : 1.

6. Agent, en particulier agent de modification pour l'obtention de résines aminoplastes qui soient stables au stockage et présentent un faible rapport molaire, à base d'un produit de condensation aminoplaste de formaldéhyde, de mélamine et d'un polyalcool, caractérisé en ce qu'il peut être obtenu en faisant réagir, en solution aqueuse à un pH de plus de 7, du formaldéhyde, de la mélamine et un polyalcool comportant jusqu'à 10 atomes de C, dans un rapport molaire de 1-1,2 : 1 : 1-5, à la température d'ébullition, jusqu'à une diluabilité à l'eau limitée, les quantités des corps participant à la réaction étant choisies de telle manière que l'on obtienne une solution à 30 % au moins du produit de condensation.

7. Résine imprégnatrice à base d'une résine de mélamine-formaldéhyde, contenant 1 à 50 % en poids, par rapport aux composants non aqueux, d'un agent de modification selon l'une quelconque des revendications 1 à 6, avec cette condition que le rapport molaire du formaldéhyde à la mélamine soit compris entre 1,5 et 1,7.

8. Utilisation de produits de condensation aminoplastes qui ont été obtenus suivant l'une quelconque des revendications 1 à 5, pour la modification de résines imprégnatrices.